(19)

Europäisches Patentamt

European Patent Office

Office européen des brevets

(11) **EP 4 350 597 B1**

(12) **EUROPEAN PATENT SPECIFICATION**

(45) Date of publication and mention of the grant of the patent:
**25.06.2025  Bulletin 2025/26**

(21) Application number: **23200960.5**

(22) Date of filing: **29.09.2023**

(51) International Patent Classification (IPC):
**G06Q 30/0201** *(2023.01)*    **G06Q 30/0283** *(2023.01)*
**G06Q 30/0202** *(2023.01)*    **G06Q 30/0207** *(2023.01)*
**G06Q 30/0211** *(2023.01)*

(52) Cooperative Patent Classification (CPC):
**G06Q 30/0201; G06N 20/00; G06Q 30/0202;
G06Q 30/0206; G06Q 30/0207; G06Q 30/0211;
G06Q 30/0283**

(54) **METHOD AND SYSTEM FOR DETERMINING OPTIMAL PRICE PROMOTION PARAMETERS**

VERFAHREN UND SYSTEM ZUR BESTIMMUNG OPTIMALER PREISWERBUNGSPARAMETER

PROCÉDÉ ET SYSTÈME POUR DÉTERMINER DES PARAMÈTRES OPTIMAUX DE PROMOTION DE PRIX

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **04.10.2022  IN 202221057043**

(43) Date of publication of application:
**10.04.2024  Bulletin 2024/15**

(73) Proprietor: **Tata Consultancy Services Limited
Maharashtra (IN)**

(72) Inventors:
• **KUMAR, SUMAN**
  **411013 Pune, Maharashtra (IN)**
• **SARKAR, SIDDHARTHA**
  **411013 Pune, Maharashtra (IN)**
• **BALARAMAN, Vivek**
  **411006 Pune, Maharashtra (IN)**
• **SHAW, AVISHEK KUMAR**
  **700160 Kolkata, West Bengal (IN)**

(74) Representative: **Goddar, Heinz J.
Boehmert & Boehmert
Anwaltspartnerschaft mbB
Pettenkoferstrasse 22
80336 München (DE)**

(56) References cited:
**US-A1- 2021 019 804    US-A1- 2021 125 237
US-A1- 2022 058 661**

**Description**

CROSS-REFERENCE TO RELATED APPLICATIONS AND PRIORITY

The present application claims priority to Indian application no. 202221057043, filed on October 4, 2022.

TECHNICAL FIELD

The disclosure herein generally relates to price promotion for consumer-packaged goods (CPGs), and, more particularly, to a method and a system for determining optimal price promotion parameters for CPGs.

BACKGROUND

A reference price (RP) is the price that a consumer is willing to pay for a good or service. The optimal pricing strategy can be determined via segmenting the market into distinct consumer groups based on the RP that a consumer group is willing to pay. Further based on the consumers RPs, the organization fixes a selling price at which the organization maximizes its profits.

The techniques to determine the optimal pricing strategy is subjective and is dependent on goods/products being sold, wherein the optimal pricing strategy for Consumer-packaged goods (CPG) is different compared to other types of goods or products. The CPGs includes items that are frequently purchased by consumers and requires routine replacement or replenishment. The CPGs includes goods such as food, beverages, clothes, tobacco, makeup, and household products, etc.,

The existing techniques mostly determine the optimal pricing strategy of CPG based on non-behavioral factors, wherein there is no explicit focus on consumers' behavior patterns and idiosyncrasies. Further, other state-of-art techniques utilize historic price/sales trends for determining optimal pricing strategy, however, these are not efficient. Hence there is a need for techniques to determine optimal pricing strategy based on an understanding of consumer's RP. Document (US20220058661A1) discloses methods, apparatus, systems and articles of manufacture are disclosed to control market strategy adjustments. An example apparatus includes a target principle generator to determine a target principle of a product based on at least one lever, the at least one lever indicative of an adjustable parameter corresponding to the product, an execution analyzer to compare in-market data of the product to the target principle of the product, a score generator to determine an aggregate score of the product based on the comparison, and an output generator to reduce discretionary input of an analyst by generating an output, the output including the aggregate score of the product and a recommended adjustment to the at least one lever (Abstract). Document (US20210125237A1) discloses method, apparatus, and computer program product are disclosed to improve selection of promotion pricing parameters. The method may determine one or more promotion pricing parameters for a promotion that is offered by a promotion and marketing service. The method includes generating one or more predictive models based on historical promotion performance data and generating a revenue equation using the one or more predictive models. The revenue equation provides an estimate of a revenue received by the promotion and marketing service based on the one or more predictive models. The method further includes determining an estimated revenue using the revenue equation based on one or more input sets of promotion pricing parameters provided as input to the revenue equation, and selecting at least one of the input sets of promotion pricing parameters for the promotion based on the estimated revenue. A corresponding apparatus and computer program product are also provided (Abstract).

SUMMARY

Embodiments of the present disclosure present technological improvements as solutions to one or more of the above-mentioned technical problems recognized by the inventors in conventional systems. For example, in one embodiment, a method for determining optimal price promotion parameters is provided.

The system includes a memory storing instructions, one or more communication interfaces, and one or more hardware processors coupled to the memory via the one or more communication interfaces, wherein the one or more hardware processors are configured by the instructions to receive a plurality of inputs from a plurality of sources, via one or more hardware processors, wherein the plurality of inputs is associated with one of a consumer-packaged goods (CPGs) and the plurality of inputs comprises information on a plurality of customers, a plurality of products and a range of promotion parameters, where the plurality of products is associated with a plurality of categories, a plurality of classes and a plurality of brands. The system is further configured to pre-process the plurality of inputs to obtain a plurality of pre-processed data, via the one or more hardware processors, wherein the plurality of inputs is pre-processed based on a plurality of pre-processing techniques. The system is further configured to extract a plurality of features via the one or more hardware processors, wherein the plurality of features is extracted using the plurality of pre-processed data, wherein the plurality of features comprises a memory-based reference price, a consumer brand loyalty, an average consumption rate and a household inventory. The system is further configured to estimate a plurality of behavioral elements by training a plurality of behaviour models, via the one or more hardware processors, wherein the plurality of behavioral elements comprises a plurality of purchase incidence parameters, a plurality of brand choice parameters and a plurality of purchase quantity parameters and the training of the plurality of behaviour models comprises: estimating the plurality of purchase incidence parameters based on training a purchase incidence model, wherein the purchase incidence model is trained based on a logistic regression technique; estimating the plurality of brand choice parameters based on training a brand choice model, wherein the brand choice model is trained based on a multinomial logistic regression technique; and estimating the plurality of purchase quantity parameters based on training a purchase quantity model, wherein the purchase quantity model is trained based on a Zero-truncated Poisson regression technique. The system is further configured to generate a plurality of synthetic consumer data based on the plurality of pre-processed data and the plurality of feature using a data sampling technique, wherein the plurality of synthetic consumer data indicates a population of virtual consumers. The system is further configured to map the plurality of synthetic consumer data and the plurality of behavioral elements with the plurality of behaviour models to obtain a model population synthesis component based on an association technique. The system is further configured to estimate a plurality of optimal price promotion parameters, using the range of promotion parameters, the model population synthesis component and the plurality of brands based on a simulation-based optimization technique.

In another aspect, a method for determining optimal price promotion parameters is provided. The method includes receiving a plurality of inputs from a plurality of sources, wherein the plurality of inputs is associated with one of a consumer-packaged goods (CPGs) and the plurality of inputs comprises information on a plurality of customers, a plurality of products and a range of promotion parameters, where the plurality of products is associated with a plurality of categories, a plurality of classes and a plurality of brands. The method further includes pre-processing the plurality of inputs to obtain a plurality of pre-processed data, wherein the plurality of inputs is pre-processed based on a plurality of pre-processing techniques. The method further includes extracting a plurality of features, wherein the plurality of features is extracted using the plurality of pre-processed data, wherein the plurality of features comprises a memory-based reference price, a consumer brand loyalty, an average consumption rate and a household inventory. The method further includes estimating a plurality of behavioral elements by training a plurality of behaviour models, wherein the plurality of behavioral elements comprises a plurality of purchase incidence parameters, a plurality of brand choice parameters and a plurality of purchase quantity parameters and the training of the plurality of behaviour models comprises: estimating the plurality of purchase incidence parameters based on training a purchase incidence model, wherein the purchase incidence model is trained based on a logistic regression technique; estimating the plurality of brand choice parameters based on training a brand choice model, wherein the brand choice model is trained based on a multinomial logistic regression technique; and estimating the plurality of purchase quantity parameters based on training a purchase quantity model, wherein the purchase quantity model is trained based on a Zero-truncated Poisson regression technique. The method further includes generating a plurality of synthetic consumer data based on the plurality of pre-processed data and the plurality of feature using a data sampling technique, wherein the plurality of synthetic consumer data indicates a population of virtual consumers. The method further includes mapping the plurality of synthetic consumer data and the plurality of behavioral elements with the plurality of behaviour models to obtain a model population synthesis component based on an association technique. The method further includes estimating a plurality of optimal price promotion parameters, using the range of promotion parameters, the model population synthesis component and the plurality of brands based on a simulation-based optimization technique.

In yet another aspect, a non-transitory computer readable medium for determining optimal price promotion parameters is provided. The program includes receiving a plurality of inputs from a plurality of sources, wherein the plurality of inputs is associated with one of a consumer-packaged goods (CPGs) and the plurality of inputs comprises information on a plurality of customers, a plurality of products and a range of promotion parameters, where the plurality of products is associated with a plurality of categories, a plurality of classes and a plurality of brands. The program further includes pre-processing the plurality of inputs to obtain a plurality of pre-processed data, wherein the plurality of inputs is pre-processed based on a plurality of pre-processing techniques. The program further includes extracting a plurality of features, wherein the plurality of features is extracted using the plurality of pre-processed data, wherein the plurality of features comprises a memory-based reference price, a consumer brand loyalty, an average consumption rate and a household inventory. The program further includes estimating a plurality of behavioral elements by training a plurality of behaviour models, wherein the plurality of behavioral elements comprises a plurality of purchase incidence parameters, a plurality of brand choice parameters and a plurality of purchase quantity parameters and the training of the plurality of behaviour models comprises: estimating the plurality of purchase incidence parameters based on training a purchase incidence model, wherein the purchase incidence model is trained based on a logistic regression technique; estimating the plurality of brand choice parameters based on training a brand choice model, wherein the brand choice model is trained based on a multinomial logistic regression technique; and estimating the plurality of purchase quantity parameters based on training a purchase quantity model, wherein the purchase quantity model is trained based on a Zero-truncated Poisson regression technique. The program further includes generating a plurality of synthetic consumer data based on the plurality of pre-processed data and the plurality of feature using a data sampling technique, wherein the plurality of synthetic consumer data indicates a population of virtual consumers. The program further includes mapping the plurality of synthetic consumer data and the plurality of behavioral elements with the plurality of behaviour models to obtain a model population synthesis component based on an association technique. The program further includes estimating a plurality of optimal price promotion parameters, using the range of promotion parameters, the model population synthesis component and the plurality of brands based on a simulation-based optimization technique.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG.1 illustrates an exemplary system for determining optimal price promotion parameters according to some embodiments of the present disclosure.
FIG.2 is a block diagram depicting a functional overview of the system of FIG. 1 for determining optimal price promotion parameters according to some embodiments of the present disclosure.
FIG.3A, FIG.3B and FIG.3C is a flow diagram illustrating a method (300) for determining optimal price promotion parameters, by the system of FIG.1, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

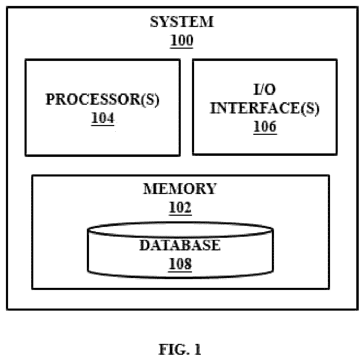

Referring now to the drawings, and more particularly to FIG.1 through FIG.3C, where similar reference characters denote corresponding features consistently throughout the figures, there are shown preferred embodiments and these embodiments are described in the context of the following exemplary system and/or method.

FIG.1 is a functional block diagram of a system 100 for determining optimal price promotion parameters in accordance with some embodiments of the present disclosure.

In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of the system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 is configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, a network cloud and the like.

The I/O interface(s) 106 can include a variety of software and hardware interfaces, for example, a web interface, a graphical user interface, a touch user interface (TUI) and the like and can facilitate multiple communications within a wide variety of networks N/W and protocol types, including wired networks, for example, LAN, cable, etc., and wireless networks, such as WLAN, cellular, or satellite. In an embodiment, the I/O interface (s) 106 can include one or more ports for connecting a number of devices (nodes) of the system 100 to one another or to another server.

The memory 102 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

Further, the memory 102 may include a database 108 configured to include information regarding determining optimal price promotion parameters. The memory 102 may comprise information pertaining to input(s)/output(s) of each step performed by the processor(s) 104 of the system 100 and methods of the present disclosure. In an embodiment, the database 108 may be external (not shown) to the system 100 and coupled to the system via the I/O interface 106.

The system 100 supports various connectivity options such as BLUETOOTH®, USB, ZigBee and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. The components and functionalities of the system 100 are described further in detail.

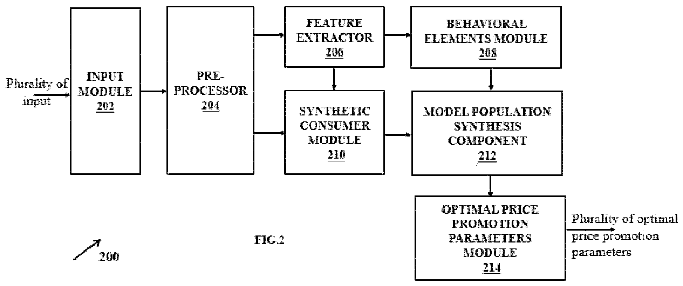

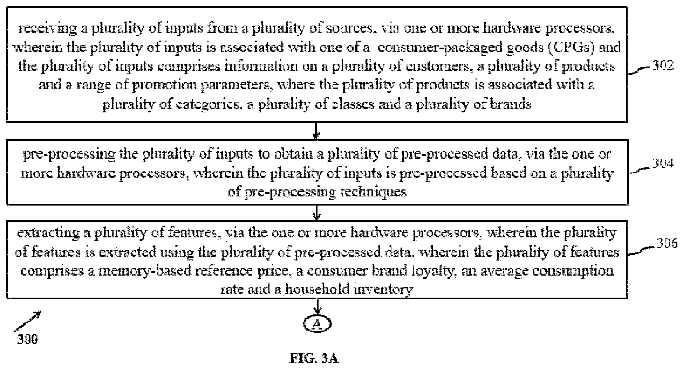

Functions of the components of system 100 are explained in conjunction with functional overview of the system 100 in FIG.2 and flow diagram of FIGS.3A-3C.

FIG.2 is an example block diagram of the various modules of the system of FIG. 1, in accordance with some embodiments of the present disclosure. As depicted in the architecture, the FIG.2 illustrates the functions of the modules of the system 100 that includes determining optimal price promotion parameters.

The system 200 for determining optimal price promotion parameters is configured to receive a plurality of inputs, using an input module 202. The plurality of inputs is associated with one of a consumer-packaged goods (CPGs). The plurality of inputs comprises a plurality of customers, a plurality of products and a range of promotion parameters, where the plurality of products is associated with a plurality of categories, a plurality of classes and a plurality of brands. The system 200 further comprises a pre-processor 204 configured for pre-processing the plurality of inputs to obtain a plurality of pre-processed data. The plurality of inputs is pre-processed based on a plurality of pre-processing techniques. The system 200 further comprises a feature extractor 206 configured for extracting a plurality of features using the plurality of pre-processed data. The plurality of features comprises a memory-based reference price, a consumer brand loyalty, an average consumption rate and a household inventory. The system 200 further comprises a behavioral module 208 configured for estimating a plurality of behavioral elements. The plurality of behavioral elements is estimated by training a plurality of behaviour models. The plurality of behavioral elements comprises a plurality of purchase incidence parameters, a plurality of brand choice parameters and a plurality of purchase quantity parameters. The system 200 further comprises a synthetic consumer module 210 configured for generating a plurality of synthetic consumer data. The plurality of synthetic consumer data indicates a population of virtual consumers. The plurality of synthetic consumer data is generated based on the plurality of pre-processed data and the plurality of feature using a data sampling technique. The system 200 further comprises a model population synthesis component 212 configured for mapping the plurality of synthetic consumer data and the plurality of behavioral elements with the plurality of behaviour models. The mapping is performed to obtain a model population synthesis component based on an association technique. The system 200 further comprises an optimal price promotion parameters module 214 configured for estimating a plurality of optimal price promotion parameters. The plurality of optimal price promotion parameters is estimated using the range of promotion parameters, the model population synthesis component and the plurality of brands based on a simulation-based optimization technique.

The various modules of the system 100 and the block in FIG.2 are configured for determining optimal price promotion parameters and are implemented as at least one of a logically self-contained part of a software program, a self-contained hardware component, and/or, a self-contained hardware component with a logically self-contained part of a software program embedded into each of the hardware component that when executed perform the above method described herein.

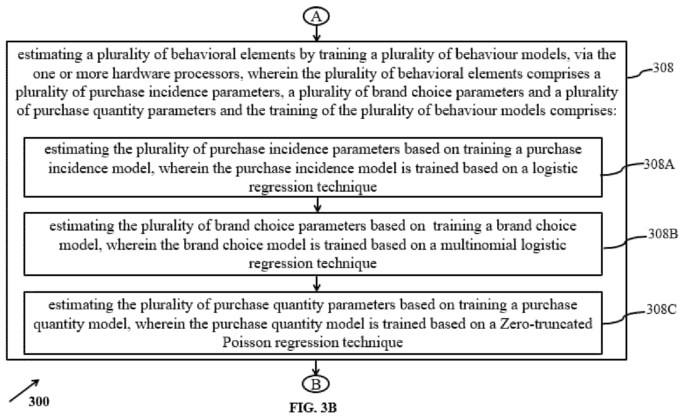

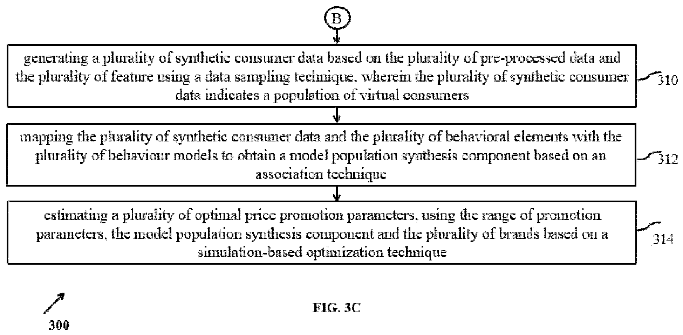

Functions of the components of the system 200 are explained in conjunction with functional modules of the system 100 stored in the memory 102 and further explained in conjunction with flow diagram of FIG.3A, FIG.3B and FIG.3C. The FIG.3A, FIG.3B and FIG.3C with reference to FIG.1, is an exemplary flow diagram illustrating a method 300 for determining optimal price promotion parameters using the system 100 of FIG. 1 according to an embodiment of the present disclosure.

The steps of the method of the present disclosure will now be explained with reference to the components of the system 100 for determining optimal price promotion parameters and the modules 202-214 as depicted in FIG.2 and the flow diagrams as depicted in the FIG.3A, FIG.3B and FIG.3C. Although process steps, method steps, techniques or the like may be described in a sequential order, such processes, methods and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

At step 302 of the method (300), a plurality of inputs is received in the input module 202. The plurality of inputs is associated with one of a consumer-packaged goods (CPGs). The plurality of inputs comprises a plurality of customers, a plurality of products and a range of promotion parameters.

In an embodiment, the range of promotion parameters are promotion depth expressed as a percentage of the base price, the promotion duration (the length of time for which the promotion will run) and the price rigidity (denotes the time interval between two price changes). The plurality of customers are persons or entities who are willing to purchase the plurality of products, wherein the plurality of customers also includes a demographic data, a transaction data of the customers.

The plurality of products is associated with a plurality of categories, a plurality of classes and a plurality of brands. In an example scenario, a customer chooses to buy a pasta product where the product is of brand 'Barilla™', of class "Spaghetti" of category "pasta". The promotion parameters (promotion depth, promotion duration and price rigidity) determine the price of the product on a given day.

At step 304 of the method (300), the plurality of inputs is pre-processed to obtain a plurality of pre-processed data at the pre-processor 204. The plurality of inputs is pre-processed based on a plurality of pre-processing techniques.

In an embodiment, the plurality of pre-processing techniques includes a data cleaning technique and a data filtration technique.

During the data cleaning, missing prices (associated with the brand) is generated for each product for a specific day. In, the transaction data which involves price discount by utilizing a coupon is also removed. Further, the transaction containing invalid price are also removed, wherein the invalid price is a negative or null value.

During the data filtration, the plurality of inputs is processed to identify a category/subcategory based on highest sales, as the plurality of inputs comprises multiple product categories/sub-categories. Further there are several more filtrations performed based on the selection of relevant brands and selection of consumers. The process of selection of relevant brands includes identification of the top selling brands based on sales and filtering out the transactions corresponding to other brands from the data. Further the process of selection of consumers includes selection of consumers having number of repeat purchase greater than a pre-defined threshold, such as consumers having at-least five transactions in an initialization period and a training period is selected, wherein the initialization period is the initial few weeks of transaction data used for initialization of features, and the subsequent weeks of data are used for training the models called training period.

At step 306 of the method (300), a plurality of features is extracted using the plurality of pre-processed data in the feature extractor 206. The plurality of features comprises a memory-based reference price, a consumer brand loyalty, an average consumption rate and a household inventory.

In an embodiment, the memory-based reference price is computed based on previous purchases of a consumer, as shown below:

$$RefPrice_{ct} = \alpha RefPrice_{c(t-1)} + (1-\alpha)Price_{c(CB[t-1])(t-1)} \qquad (1)$$

where,

$RefPrice_{ct}$ is reference price of consumer c on purchase occasion t,
$Price_{c(CB[t-1])(t-1)}$ is the price of the chosen brands (CB) by consumer c on a past purchase occasion (t - 1), and
$\alpha$ is a price carryover parameter.

$$RefPrice_{ckt} = \alpha RefPrice_{ckt} + (1-\alpha)Price_{hk(t-1)} \qquad (2)$$

where,

$RefPrice_{ckt}$ is reference price of consumer c for brand k on purchase occasion t,
$Price_{hk(t-1)}$ is the price of the brand k chosen by consumer c on past purchase occasion (t-1), and
$\alpha$ is a price carryover parameter.

In an embodiment, the consumer brand loyalty is associated with an inclination to purchase a brand over another brand, the average consumption rate is an average weekly consumption of the product for the consumer. Thus, the consumer brand loyalty of consumer c to brand k on purchase occasion t is expressed as:

$$BLOY_{ckt} = \mu BLOY_{ck(t-1)} + (1-\mu)I_{ck(t-1)} \qquad (3)$$

*where,*

$BLOY_{ckt}$ is brand loyalty of consumer c towards brand k on purchase occasion t,
$\mu$ is the loyalty carryover parameter, and
$I_{ck(t-1)}$ 1, if brand k is purchased by consumer c at (t - 1), 0 otherwise.

While performing the selection of the RP model, the most suitable RP model is selected from plurality of reference price models (equation 1 and 2). Further, the unknown price carryover parameter ($\alpha$) and loyalty carryover parameter ($\mu$) are estimated. The selection of reference price model as well as carryover parameters is performed based on the model fit (pseudo R2 and log-likelihood) of reference price-based brand choice model as shown in equation 7. The model is trained for a plurality of reference price models, a range of price carryover and loyalty carryover parameters. The specific model and the carryover parameters are chosen so as to give the best model fit.

At step 308 of the method (300), a plurality of behavioral elements is estimated by training a plurality of behaviour models in the behavioral module 208. The plurality of behavioral elements comprises a plurality of purchase incidence parameters, a plurality of brand choice parameters and a plurality of purchase quantity parameters. The training of the plurality of behaviour models comprises several steps as explained in below steps - 308A to 308C.

At step 308A of the method (300), the plurality of purchase incidence parameters is estimated based on training a purchase incidence model. The purchase incidence model is trained based on a logistic regression technique.

In an embodiment, the probability that consumer *c* will purchase the product category at time *t* is given by:

$$P_{ct}(inc) = \frac{\exp(V_{ct})}{1+\exp(V_{ct})} \qquad (5)$$

where,

$$V_{ct} = \beta_0 + \beta_1 \overline{CR_c} + \beta_2 INV_{ct},$$

$CR_c$ = the rate of weekly consumption for consumer *c,* and
$INV_{ct}$ = household inventory for consumer *c* at time *t.*

In an embodiment, the weekly consumption rate is defined by the following equation:

$$\overline{CR_c} = \frac{1}{N} \sum_{t=1}^{N} Q_{ct} \qquad (4)$$

where,

$CR_c$ is the average consumption rate of consumer *c,*
$Q_{ct}$ is quantity bought by consumer *c* at time *t*
$N$ is total duration (in weeks)

In an embodiment, the household inventory indicates an inventory estimate for a consumer at a pre-defined time. To estimate inventory, it is considered that consumers draw down their household inventory linearly based on their consumption rate. The household inventory of the consumer c is calculated using the following equation:

$$INV_{ct} = INV_{c(t-1)} + Q_{c(t-1)} - \overline{CR_c} * I_{(t,t-1)} \qquad (6)$$

*where,*

$Q_{c(t-1)}$ is quantity brought on previous store visit by consumer *c,* and
$I_{(t,t-1)}$ is interval (in weeks) between store visit (*t* - 1) and t.

At step 308B of the method (300), the plurality of brand choice parameters is estimated based on training a brand choice model. The brand choice model is trained based on a multinomial logistic regression technique.

In an embodiment, the brand choice model is expressed as a multinomial logit model and the conditional probability that a consumer *c* will choose brand *k* during shopping trip *t,* if it decides to buy is calculated as:

$$P_{ct}(j|inc) = \exp(U_{ckt})/ \sum_{i}^{n} \exp(U_{cit}) \qquad (7)$$

*where,*

$u_{ckt}$ is the utility of brand *j* for consumer *c* on an occasion *t,* and
$i$ = 1,2,3 ... *n* are number of brands.

Scenario 1: When RP is brand specific, then to account for competitive effects of the prices of other brands, a separate price variable is included in the utility function:

$$U_{ckt} = \beta_{0,k} + \beta_p Price_{ckt} + \beta_{rp}(RefPrice_{ckt} - Price_{ckt}) + \beta_L BLOY_{ckt}$$

$$(8)$$

*where,*

$Price_{ckt}$, $RefPrice_{ckt}$ and $BLOY_{ckt}$ are the price, RP and brand loyalty towards brand $k$ for consumer $c$ (on occasion $t$) respectively.

Scenario 2: When RP is brand independent, the difference is computed by subtracting a fixed quantity (RP) from the respective prices. Therefore, a separate price term should not be included in the model:

$$U_{ckt} = \beta_{0,k} + \beta_{rp}(RefPrice_{ck} - Price_{ck}) + \beta_L BLOY_{ckt} \qquad (9)$$

A symmetric model with gain (RP-Price) and loss (Price-RP) have been considered to have symmetric effects.

At step 308C of the method (300), the plurality of purchase quantity parameters is estimated based on training a purchase quantity model. The purchase quantity model is trained based on a Zero-truncated Poisson regression technique.

In an embodiment, a Zero-truncated Poisson regression is used to compute the units purchased. The conditional probability of purchasing $n$ units ($n \geq 1$) by consumer $c$ is given by:

$$P_{ct}(n|inc\ \&\ k) = \frac{(\lambda_{ckt})^n}{\exp(\lambda_{ckt}-1)n!} \qquad (10)$$

where,

$$\lambda_{ckt} = \exp(\beta_0 + \beta_1 Size_t + \beta_2\ INV_{ct} + \beta_3 U_c)$$

$Size_t$ is the size in ounces of the chosen brand at time $t$
$INV_{ht}$ is the mean-centered inventory
$U_c$ is the average number of units purchased by consumer $c$

At step 310 of the method (300), a plurality of synthetic consumer data is generated in the model population synthesis component 212. The plurality of synthetic consumer data indicates a population of virtual consumers.

The plurality of synthetic consumer data is generated based on the plurality of pre-processed data and the plurality of feature using a data sampling technique.

In an embodiment, the consumer data containing the demographic variables is taken as input and additional variables generated by the feature extractor 206 and outputs a population of virtual consumers.

The feature extractor component provides the additional variables for each consumer which is integrated into the consumer data. Within the combined consumer data, each row corresponds to a different consumer id along with his/her demographic variables (age, household size and income) and additional variables (Consumer Reference Price, Consumer brand loyalty, Average consumption rate, and Household inventory). The synthetic consumer module 210 then generates synthetic consumer data of required size by sampling (using stratified or random sampling) from the combined dataset.

At step 312 of the method (300), the plurality of synthetic consumer data and the plurality of behavioral elements is mapped with the plurality of behaviour models in the model population synthesis component 212. The mapping is performed to obtain a model population synthesis component based on an association technique.

In an embodiment, the three trained behaviour models are taken as input and the synthetic consumers population generated by synthetic consumer module 210, and outputs a synthetic population with behavior models attached to each synthetic consumer.

These variables present in the synthetic population describes the state of the consumers and the attached models determine the behavior of each consumer in terms of the actions they will take based on the choices presented to them. The synthetic population with attached behavior models is operationalized in the optimal price promotion parameters module 214.

At step 314 of the method (300), a plurality of optimal price promotion parameters is estimated in the optimal price promotion parameters module 214. The plurality of optimal price promotion parameters is estimated using the range of promotion parameters, the model population synthesis component and the plurality of brands based on a simulation-based optimization technique.

In an embodiment, optimal price promotion parameters module 214 is a simulation driven system that takes as input the population of synthetic consumers, the range of promotion parameters such as promotion depth, promotion duration and the price rigidity and then generates as output the optimal price promotion parameters for various products to generate maximal sales. The optimal price promotion parameters module 214 has two functionalities -

(a) Retail Environment Setup:

Given details of top selling identified product brands such as brand name, and the brand price as well as the promotion parameters that determines how the prices will change with time, the Retail Environment setup is assumed to have no limit on the number of consumers purchasing and can fulfill the quantity ordered by all consumers (no shortages of stocks).

(b) Simulation:

The simulator takes as input the retail setup and the population of synthetic consumers with attached behavior on purchase incidence, brand choice and purchase quantity. The simulator (used for simulation) is an agent-based modeling and simulation platform, where each synthetic consumer is taken as an agent with their behavior described by the attached behavior models. The simulator is run for a period of virtual simulation time (i.e., the virtual time in terms of days / weeks / months) and where on each sim-day, a subset of synthetic consumers whose purchase incidence model indicates that the time has come to visit the store, will visit the virtual store. On subset of synthetic consumer's virtual visit, they will face a specific combination of promotion parameters associated with various brands in the in-focus product category. The brand choice model of each virtual consumer will then decide which brand to purchase and of how much quantity. The simulator generates the weekly sales for the specific brand in focus for the given combinations. Next, it aggregates the weekly sales for the period of virtual simulation time to generate the total sales. Simulations are run multiple times to run through various combinations of promotion parameters. The optimization step uses heuristic methods such as genetic algorithm to efficiently identify the combination of optimal promotion parameters. The parameters which generate the maximal sales for the selected brand/s are considered as optimal promotion parameters.

EXPERIMENTS:

Experiments had been conducted for the disclosed method using a publicly available dataset containing transaction data covering 2 years for the pasta product category. The top 6 best-selling pasta brands comprising national and private labels are considered. In the data preprocessing, the consumers who have made at least 5 purchases in the training period and at least 10 purchases in the whole duration are considered. The features such as memory-based reference price, inventory and loyalty are generated within the data and further the three behavioral models (brand choice models, purchase incidence model, purchase quantity model) are trained. A total of 283 synthetic consumers are generated, where 170 belongs to the group with low RP (mean value of 0.5 Euro) and remaining 113 belongs to group with high RP (mean value of 0.98 Euro), maintaining the original distribution of repeat buyers present in the data. These synthetic customers attached with trained behavioral models were taken as input to the simulator. The input range of promotion parameters (depth - 10% to 50%, duration- 1 to 5 weeks and rigidity 1 to 5 weeks). The optimal promotion parameters for the two brands are identified. The brand A was the top selling product for the consumer group with low RP and Brand B was the top selling product for the consumer group with high RP. For Brand A, the optimal promotion parameters were identified as Price Rigidity - 4 weeks, Promotion Duration - 1 week and Promotion Depth - 20% leading to an increase of 4% in the sales. For Brand B, the optimal parameters were Price Rigidity - 3 weeks, Promotion Duration - 3 weeks and Promotion Depth - 50% leading to an increase of 94% in sales. The surge in sales for Brand B with high promotion depth is seen due to the brand switching behavior exhibited by consumers group with low RP towards brand B. As a result of high promotion depth (range of 40% to 50%), which leads to Brand B price coming nearly identical to price of Brand A (0.53 Euro). Therefore, consumers from Group 1 having low RP (~0.5 Euro) now see a high value in purchasing Brand B which belongs to a popular national brand. This ultimately induces brand switching behavior towards Brand B.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The disclosure generally relates to determining optimal price promotion parameters for Consumer-packaged goods (CPG). The CPGs includes items that are frequently purchased by consumers and requires routine replacement or replenishment such as food, beverages, clothes, tobacco, makeup, and household products, etc., The techniques to determine the optimal pricing strategy is subjective and is dependent on goods/products being sold. The existing techniques mostly determine the optimal pricing strategy of CPG based on non-behavioral factors or on historic price/sales trends, wherein there is no explicit focus on consumers' behavior patterns and are not efficient. The disclosure proposes to determine the optimal price promotion parameters in several steps including - estimating a plurality of behavioral elements, generating a plurality of synthetic consumer data and mapping the plurality of synthetic consumer data and the plurality of behavioral elements, and using simulation-based optimization to finally determine the optimal price promotion parameters.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (300), comprising:

receiving a plurality of inputs from a plurality of sources, via one or more hardware processors, wherein the plurality of inputs is associated with one of a consumer-packaged goods, CPGs, and the plurality of inputs comprises information on a plurality of customers, a plurality of products and a range of promotion parameters, where the plurality of products is associated with a plurality of categories, a plurality of classes and a plurality of brands (302), wherein the range of promotion parameters are a promotion depth, a promotion duration and a price rigidity;

pre-processing the plurality of inputs to obtain a plurality of pre-processed data, via the one or more hardware processors, wherein the plurality of inputs is pre-processed based on a plurality of pre-processing techniques (304);

extracting a plurality of features via the one or more hardware processors, wherein the plurality of features is extracted using the plurality of pre-processed data, wherein the plurality of features comprises a memory-based reference price, a consumer brand loyalty, an average consumption rate and a household inventory (306);

estimating a plurality of behavioral elements by training a plurality of behaviour models (308), via the one or more hardware processors, wherein the plurality of behavioral elements comprises a plurality of purchase incidence parameters, a plurality of brand choice parameters and a plurality of purchase quantity parameters and the training of the plurality of behaviour models comprises:

estimating the plurality of purchase incidence parameters based on training a purchase incidence model, wherein the purchase incidence model is trained based on a logistic regression technique (308A);

estimating the plurality of brand choice parameters based on training a brand choice model, wherein the brand choice model is trained based on a multinomial logistic regression technique (308B); and

estimating the plurality of purchase quantity parameters based on training a purchase quantity model, wherein the purchase quantity model is trained based on a Zero-truncated Poisson regression technique (308C);

generating a plurality of synthetic consumer data based on the plurality of pre-processed data and the plurality of feature using a data sampling technique, wherein the plurality of synthetic consumer data indicates a population of virtual consumers (310), wherein the synthetic consumer data include demographic variables that are taken as input and additional variables for each consumer generated by a feature extractor, wherein within combined consumer data, each row corresponds to a different consumer ID along with their demographic variables such as age, household size and income, and additional variables such as consumer reference price, consumer brand loyalty, average consumption rate, and household inventory, wherein the generated synthetic consumer data is of required size by sampling using stratified sampling or random sampling from a combined dataset;

mapping the plurality of synthetic consumer data and the plurality of behavioral elements with the plurality of behaviour models to obtain a model population synthesis component based on an association technique (312); and

estimating a plurality of optimal price promotion parameters, using the range of promotion parameters, the model population synthesis component and the plurality of brands based on a simulation-based optimization technique (314), wherein the simulation-based optimization technique is based on an agent-based modelling and a simulation platform where each synthetic consumer is taken as an agent with their behavior described by the attached behavior models, wherein a simulator is run for a period of virtual simulation time, and generates weekly sales for a specific brand for a set of combinations followed by aggregating the weekly sales for the period of a virtual simulation time to generate total sales, wherein simulations are run multiple times to run through various combinations of promotion parameters.

2. The processor implemented method of claim 1, wherein the plurality of pre-processing techniques includes a data cleaning technique and a data filtration technique, wherein during the data cleaning, a missing price associated with the brand is generated for each product for a day, a transaction involving price discount with a coupon is removed, and a transaction containing invalid price, referring to negative value, is removed, wherein during the data filtration, the plurality of inputs is processed to identify a category/subcategory based on highest sales, as the plurality of inputs comprises multiple product categories/sub-categories.

3. The processor implemented method of claim 1, wherein the memory-based reference price is computed based on previous purchases of a consumer, the consumer brand loyalty is associated with an inclination to purchase a brand over another brand, the average consumption rate is an average weekly consumption of the product for the consumer and the household inventory indicates an inventory estimate for the consumer at a pre-defined time.

4. The processor implemented method of claim 1, wherein the data sampling technique includes a random sampling technique or a stratified sampling technique.

5. The processor implemented method of claim 1, wherein the plurality of optimal price promotion parameters is estimated using an optimization technique, wherein the optimization technique is a heuristic method that includes a genetic algorithm to identify a combination of the optimal promotion parameters and the parameters which generate maximal sales for selected brand or brands are considered as the optimal promotion parameters.

6. A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

receive a plurality of inputs from a plurality of sources, wherein the plurality of inputs is associated with one of a consumer-packaged goods, CPGs, and the plurality of inputs comprises information on a plurality of customers, a plurality of products and a range of promotion parameters, where the plurality of products is associated with a plurality of categories, a plurality of classes and a plurality of brands, wherein the range of promotion parameters are a promotion depth, a promotion duration, and a price rigidity;
pre-process the plurality of inputs to obtain a plurality of pre-processed data, wherein the plurality of inputs is pre-processed based on a plurality of pre-processing techniques;
extract a plurality of features, wherein the plurality of features is extracted using the plurality of pre-processed data, wherein the plurality of features comprises a memory-based reference price, a consumer brand loyalty, an average consumption rate and a household inventory;
estimate a plurality of behavioral elements by training a plurality of behaviour models, wherein the plurality of behavioral elements comprises a plurality of purchase incidence parameters, a plurality of brand choice parameters and a plurality of purchase quantity parameters and the training of the plurality of behaviour models comprises:

estimating the plurality of purchase incidence parameters based on training a purchase incidence model, wherein the purchase incidence model is trained based on a logistic regression technique;
estimating the plurality of brand choice parameters based on training a brand choice model, wherein the brand choice model is trained based on a multinomial logistic regression technique; and
estimating the plurality of purchase quantity parameters based on training a purchase quantity model, wherein the purchase quantity model is trained based on a Zero-truncated Poisson regression technique;

generate a plurality of synthetic consumer data based on the plurality of pre-processed data and the plurality of feature using a data sampling technique, wherein the plurality of synthetic consumer data indicates a population of virtual consumers, wherein the synthetic consumer data include demographic variables that are
taken as input and additional variables for each consumer generated by a feature extractor, wherein within combined consumer data, each row corresponds to a different consumer ID along with their demographic variables such as age, household size and income, and additional variables such as consumer reference price, consumer brand loyalty, average consumption rate, and household inventory, wherein the generated synthetic consumer data is of required size by sampling using stratified sampling or random sampling from a combined dataset;
map the plurality of synthetic consumer data and the plurality of behavioral elements with the plurality of behaviour models to obtain a model population synthesis component based on an association technique; and
estimate a plurality of optimal price promotion parameters, using the range of promotion parameters, the model population synthesis component and the plurality of brands based on a simulation-based optimization technique, wherein the simulation-based optimization technique is based on an agent-based modelling and a simulation platform where each synthetic consumer is taken as an agent with their behavior described by the attached behavior models, wherein a simulator is run for a period of virtual simulation time, and generates weekly sales for a specific brand for a set of combinations followed by aggregating the weekly sales for the period of a virtual simulation time to generate total sales, wherein simulations are run multiple times to run through various combinations of promotion parameters.

7. The system of claim 6, wherein the plurality of pre-processing techniques includes a data cleaning technique and a data filtration technique, wherein during the data cleaning, a missing price associated with the brand is generated for each product for a day, a transaction involving price discount with a coupon is removed, and a transaction containing invalid price, referring to negative value, is removed, wherein during the data filtration, the plurality of inputs is processed to identify a category/subcategory based on highest sales, as the plurality of inputs comprises multiple product categories/sub-categories.

8. The system of claim 6, wherein the memory-based reference price is computed based on previous purchases of a consumer, the consumer brand loyalty is associated with an inclination to purchase a brand over another brand, the average consumption rate is an average weekly consumption of the product for the consumer and the household inventory indicates an inventory estimate for the consumer at a pre-defined time.

9. The system of claim 6, wherein the data sampling technique includes a random sampling technique or a stratified sampling technique.

10. The system of claim 6, wherein the plurality of optimal price promotion parameters is estimated using an optimization technique, wherein the optimization technique is a heuristic method that includes a genetic algorithm to identify a combination of the optimal promotion parameters and the parameters which generate maximal sales for selected brand or brands are considered as the optimal promotion parameters.

11. One or more non-transitory machine-readable information storage mediums comprising one or more instructions which when executed by one or more hardware processors cause:

receiving a plurality of inputs from a plurality of sources, wherein the plurality of inputs is associated with one of a consumer-packaged goods, CPGs, and the plurality of inputs comprises information on a plurality of customers, a plurality of products and a range of promotion parameters, where the plurality of products is associated with a plurality of categories, a plurality of classes and a plurality of brands, wherein the range of promotion parameters are a promotion depth, a promotion duration, and a price rigidity;
pre-processing the plurality of inputs to obtain a plurality of pre-processed data, wherein the plurality of inputs is pre-processed based on a plurality of pre-processing techniques;
extracting a plurality of features, wherein the plurality of features is extracted using the plurality of pre-processed data, wherein the plurality of features comprises a memory-based reference price, a consumer brand loyalty, an average consumption rate and a household inventory;
estimating a plurality of behavioral elements by training a plurality of behaviour models, wherein the plurality of behavioral elements comprises a plurality of purchase incidence parameters, a plurality of brand choice parameters and a plurality of purchase quantity parameters and the training of the plurality of behaviour models comprises:

estimating the plurality of purchase incidence parameters based on training a purchase incidence model, wherein the purchase incidence model is trained based on a logistic regression technique;
estimating the plurality of brand choice parameters based on training a brand choice model, wherein the brand choice model is trained based on a multinomial logistic regression technique; and
estimating the plurality of purchase quantity parameters based on training a purchase quantity model, wherein the purchase quantity model is trained based on a Zero-truncated Poisson regression technique;

generating a plurality of synthetic consumer data based on the plurality of pre-processed data and the plurality of feature using a data sampling technique, wherein the plurality of synthetic consumer data indicates a population of virtual consumers, wherein the synthetic consumer data include demographic variables that are taken as input and additional variables for each consumer generated by a feature extractor wherein within combined consumer data, each row corresponds to a different consumer ID along with their demographic variables such as age, household size and income, and additional variables such as consumer reference price, consumer brand loyalty, average consumption rate, and household inventory, wherein the generated synthetic consumer data is of required size by sampling using stratified sampling or random sampling from a combined dataset;
mapping the plurality of synthetic consumer data and the plurality of behavioral elements with the plurality of behaviour models to obtain a model population synthesis component based on an association technique; and
estimating a plurality of optimal price promotion parameters, using the range of promotion parameters, the model population synthesis component and the plurality of brands based on a simulation-based optimization technique, wherein the simulation-based optimization technique is based on an agent-based modelling and a simulation platform where each synthetic consumer is taken as an agent with their behavior described by the attached behavior models, wherein a simulator is run for a period of virtual simulation time, and generates weekly sales for a specific brand for a set of combinations followed by aggregating the weekly sales for the period of a virtual simulation time to generate total sales, wherein simulations are run multiple times to run through various combinations of promotion parameters.

12. The one or more non-transitory machine-readable information storage mediums of claim 11, wherein the plurality of pre-processing techniques includes a data cleaning technique and a data filtration technique, wherein during the data cleaning, a missing price associated with the brand is generated for each product for a day, a transaction involving price discount with a coupon is removed, and a transaction containing invalid price, referring to negative value, is removed, wherein during the data filtration, the plurality of inputs is processed to identify a category/subcategory based on highest sales, as the plurality of inputs comprises multiple product categories/sub-categories.

13. The one or more non-transitory machine-readable information storage mediums of claim 11, wherein the memory-based reference price is computed based on previous purchases of a consumer, the consumer brand loyalty is associated with an inclination to purchase a brand over another brand, the average consumption rate is an average weekly consumption of the product for the consumer and the household inventory indicates an inventory estimate for the consumer at a pre-defined time.

14. The one or more non-transitory machine-readable information storage mediums of claim 11, wherein the data sampling technique includes a random sampling technique or a stratified sampling technique.

15. The one or more non-transitory machine-readable information storage mediums of claim 11, wherein the plurality of optimal price promotion parameters is estimated using an optimization technique, wherein the optimization technique is a heuristic method that includes a genetic algorithm to identify a combination of the optimal promotion parameters and the parameters which generate maximal sales for selected brand or brands are considered as the optimal promotion parameters.

**Patentansprüche**

1. Prozessorimplementiertes Verfahren (300), umfassend:

Empfangen einer Mehrzahl von Eingaben von einer Mehrzahl von Quellen über einen oder mehrere Hardwareprozessoren, wobei die Mehrzahl von Eingaben mit einem von verbraucherverpackten Waren, CPGs, assoziiert ist und die Mehrzahl von Eingaben Informationen über eine Mehrzahl von Kunden, eine Mehrzahl von Produkten und einen Bereich von Promotionsparametern umfasst, wobei die Mehrzahl von Produkten mit einer Mehrzahl von Kategorien, einer Mehrzahl von Klassen und einer Mehrzahl von Marken (302) assoziiert ist, wobei der Bereich von Promotionsparametern eine Promotionstiefe, eine Promotionsdauer und eine Preisstarrheit ist;
Vorverarbeiten der Mehrzahl von Eingaben, um eine Mehrzahl von vorverarbeiteten Daten zu erhalten, über den einen oder die mehreren Hardwareprozessoren, wobei die Mehrzahl von Eingaben basierend auf einer Mehrzahl von Vorverarbeitungstechniken (304) vorverarbeitet wird;
Extrahieren einer Mehrzahl von Merkmalen über den einen oder die mehreren Hardwareprozessoren, wobei die Mehrzahl von Merkmalen unter Verwendung der Mehrzahl von vorverarbeiteten Daten extrahiert wird, wobei die Mehrzahl von Merkmalen einen speicherbasierten Referenzpreis, eine Verbrauchermarkenloyalität, eine durchschnittliche Verbrauchsrate und ein Haushaltsinventar (306) umfasst;
Schätzen einer Mehrzahl von Verhaltenselementen durch Trainieren einer Mehrzahl von Verhaltensmodellen (308) über den einen oder die mehreren Hardwareprozessoren, wobei die Mehrzahl von Verhaltenselementen eine Mehrzahl von Kaufinzidenzparametern, eine Mehrzahl von Markenauswahlparametern und eine Mehrzahl von Kaufmengenparametern umfasst und das Trainieren der Mehrzahl von Verhaltensmodellen umfasst:
Schätzen der Mehrzahl von Kaufinzidenzparametern basierend auf dem Trainieren eines Kaufinzidenzmodells, wobei das Kaufinzidenzmodell basierend auf einer logistischen Regressionstechnik (308A) trainiert wird;

Schätzen der Mehrzahl von Markenauswahlparametern basierend auf dem Trainieren eines Markenauswahlmodells, wobei das Markenauswahlmodell basierend auf einer multinomialen logistischen Regressionstechnik (308B) trainiert wird; und
Schätzen der Mehrzahl von Kaufmengenparametern basierend auf dem Trainieren eines Kaufmengenmodells, wobei das Kaufmengenmodell basierend auf einer Zero-Truncated-Poisson-Regressionstechnik (308C) trainiert wird;

Erzeugen einer Mehrzahl von synthetischen Verbraucherdaten basierend auf der Mehrzahl von vorverarbeiteten Daten und der Mehrzahl von Merkmalen unter Verwendung einer Datenabtasttechnik, wobei die Mehrzahl von synthetischen Verbraucherdaten eine Population von virtuellen Verbrauchern (310) angibt, wobei die synthetischen Verbraucherdaten demografische Variablen, die als Eingabe genommen werden, und zusätzliche Variablen für jeden Verbraucher, die von einem Merkmalsextraktor erzeugt werden, beinhalten, wobei innerhalb kombinierter Verbraucherdaten jede Zeile einer anderen Verbraucher-ID zusammen mit ihren demografischen Variablen, wie etwa Alter, Haushaltsgröße und Einkommen, und zusätzlichen Variablen, wie etwa Verbraucherreferenzpreis, Verbrauchermarkenloyalität, durchschnittliche Verbrauchsrate und Haushaltsinventar, entspricht, wobei die erzeugten synthetischen Verbraucherdaten von erforderlicher Größe sind, indem sie unter Verwendung von geschichteter Abtastung oder Zufallsabtastung aus einem kombinierten Datensatz abgetastet werden;

Zuordnen der Mehrzahl von synthetischen Verbraucherdaten und der Mehrzahl von Verhaltenselementen zu der Mehrzahl von Verhaltensmodellen, um eine Modellpopulationssynthesekomponente basierend auf einer Assoziationstechnik (312) zu erhalten; und

Schätzen einer Mehrzahl von optimalen Preisförderungsparametern unter Verwendung des Bereichs von Förderungsparametern, der Modellpopulationssynthesekomponente und der Mehrzahl von Marken basierend auf einer simulationsbasierten Optimierungstechnik (314), wobei die simulationsbasierte Optimierungstechnik auf einer agentenbasierten Modellierung und einer Simulationsplattform basiert, wobei jeder synthetische Verbraucher als Agent genommen wird, wobei sein Verhalten durch die angehängten Verhaltensmodelle beschrieben wird, wobei ein Simulator für einen Zeitraum einer virtuellen Simulationszeit ausgeführt wird und wöchentliche Verkäufe für eine spezifische Marke für einen Satz von Kombinationen erzeugt, gefolgt von dem Aggregieren der wöchentlichen Verkäufe für den Zeitraum einer virtuellen Simulationszeit, um Gesamtverkäufe zu erzeugen, wobei Simulationen mehrmals ausgeführt werden, um verschiedene Kombinationen von Förderungsparametern zu durchlaufen.

2. Prozessorimplementiertes Verfahren nach Anspruch 1, wobei die Mehrzahl von Vorverarbeitungstechniken eine Datenbereinigungstechnik und eine Datenfiltrationstechnik beinhaltet, wobei während der Datenbereinigung ein fehlender Preis, der mit der Marke assoziiert ist, für jedes Produkt für einen Tag erzeugt wird, eine Transaktion, die einen Preisrabatt mit einem Coupon beinhaltet, entfernt wird, und eine Transaktion, die einen ungültigen Preis enthält, der sich auf einen negativen Wert bezieht, entfernt wird, wobei während der Datenfiltration die Mehrzahl von Eingaben verarbeitet wird, um eine Kategorie/Unterkategorie basierend auf den höchsten Verkäufen zu identifizieren, da die Mehrzahl von Eingaben mehrere Produktkategorien/Unterkategorien umfasst.

3. Prozessorimplementiertes Verfahren nach Anspruch 1, wobei der speicherbasierte Referenzpreis basierend auf vorherigen Käufen eines Verbrauchers berechnet wird, die Verbrauchermarkenloyalität mit einer Neigung assoziiert ist, eine Marke über eine andere Marke zu kaufen, die durchschnittliche Verbrauchsrate ein durchschnittlicher wöchentlicher Verbrauch des Produkts für den Verbraucher ist und das Haushaltsinventar eine Inventarschätzung für den Verbraucher zu einer vordefinierten Zeit angibt.

4. Prozessorimplementiertes Verfahren nach Anspruch 1, wobei die Datenabtasttechnik eine Zufallsabtasttechnik oder eine geschichtete Abtasttechnik beinhaltet.

5. Prozessorimplementiertes Verfahren nach Anspruch 1, wobei die Mehrzahl von optimalen Preisförderungsparametern unter Verwendung einer Optimierungstechnik geschätzt wird, wobei die Optimierungstechnik eine heuristische Methode ist, die einen genetischen Algorithmus beinhaltet, um eine Kombination der optimalen Förderungsparameter zu identifizieren, und die Parameter, die maximale Verkäufe für ausgewählte Marke oder Marken erzeugen, als die optimalen Förderungsparameter betrachtet werden.

6. System (100), umfassend:

einen Speicher (102), der Anweisungen speichert;
eine oder mehrere Kommunikationsschnittstellen (106); und
einen oder mehrere Hardwareprozessoren (104), die über die eine oder die mehreren Kommunikationsschnittstellen (106) mit dem Speicher (102) gekoppelt sind, wobei der eine oder die mehreren Hardwareprozessoren (104) durch die Anweisungen konfiguriert sind zum:

Empfangen einer Mehrzahl von Eingaben von einer Mehrzahl von Quellen, wobei die Mehrzahl von Eingaben mit einem von verbraucherverpackten Waren, CPGs, assoziiert ist und die Mehrzahl von Eingaben Informationen über eine Mehrzahl von Kunden, eine Mehrzahl von Produkten und einen Bereich von Promotionsparametern umfasst, wobei die Mehrzahl von Produkten mit einer Mehrzahl von Kategorien, einer Mehrzahl von Klassen und einer Mehrzahl von Marken assoziiert ist, wobei der Bereich von Promotionsparametern eine Promotionstiefe, eine Promotionsdauer und eine Preisstarrheit ist;

Vorverarbeiten der Mehrzahl von Eingaben, um eine Mehrzahl von vorverarbeiteten Daten zu erhalten, wobei die Mehrzahl von Eingaben basierend auf einer Mehrzahl von Vorverarbeitungstechniken vorverarbeitet wird;

Extrahieren einer Mehrzahl von Merkmalen, wobei die Mehrzahl von Merkmalen unter Verwendung der Mehrzahl von vorverarbeiteten Daten extrahiert wird, wobei die Mehrzahl von Merkmalen einen speicherbasierten Referenzpreis, eine Verbrauchermarkenloyalität, eine durchschnittliche Verbrauchsrate und ein Haushaltsinventar umfasst;

Schätzen einer Mehrzahl von Verhaltenselementen durch Trainieren einer Mehrzahl von Verhaltensmodellen, wobei die Mehrzahl von Verhaltenselementen eine Mehrzahl von Kaufinzidenzparametern, eine Mehrzahl von Markenauswahlparametern und eine Mehrzahl von Kaufmengenparametern umfasst und das Trainieren der Mehrzahl von Verhaltensmodellen umfasst:

Schätzen der Mehrzahl von Kaufinzidenzparametern basierend auf dem Trainieren eines Kaufinzidenzmodells, wobei das Kaufinzidenzmodell basierend auf einer logistischen Regressionstechnik trainiert wird;

Schätzen der Mehrzahl von Markenauswahlparametern basierend auf dem Trainieren eines Markenauswahlmodells, wobei das Markenauswahlmodell basierend auf einer multinomialen logistischen Regressionstechnik trainiert wird; und

Schätzen der Mehrzahl von Kaufmengenparametern basierend auf dem Trainieren eines Kaufmengenmodells, wobei das Kaufmengenmodell basierend auf einer Zero-Truncated-Poisson-Regressionstechnik trainiert wird;

Erzeugen einer Mehrzahl von synthetischen Verbraucherdaten basierend auf der Mehrzahl von vorverarbeiteten Daten und der Mehrzahl von Merkmalen unter Verwendung einer Datenabtasttechnik, wobei die Mehrzahl von synthetischen Verbraucherdaten eine Population von virtuellen Verbrauchern angibt, wobei die synthetischen Verbraucherdaten demografische Variablen, die als Eingabe genommen werden, und zusätzliche Variablen für jeden Verbraucher, die von einem Merkmalsextraktor erzeugt werden, beinhalten, wobei innerhalb kombinierter Verbraucherdaten jede Zeile einer anderen Verbraucher-ID zusammen mit ihren demografischen Variablen, wie etwa Alter, Haushaltsgröße und Einkommen, und zusätzlichen Variablen, wie etwa Verbraucherreferenzpreis, Verbrauchermarkenloyalität, durchschnittliche Verbrauchsrate und Haushaltsinventar, entspricht, wobei die erzeugten synthetischen Verbraucherdaten von erforderlicher Größe sind, indem sie unter Verwendung von geschichteter Abtastung oder Zufallsabtastung aus einem kombinierten Datensatz abgetastet werden;

Zuordnen der Mehrzahl von synthetischen Verbraucherdaten und der Mehrzahl von Verhaltenselementen zu der Mehrzahl von Verhaltensmodellen, um eine Modellpopulationssynthesekomponente basierend auf einer Assoziationstechnik zu erhalten; und

Schätzen einer Mehrzahl von optimalen Preisförderungsparametern unter Verwendung des Bereichs von Förderungsparametern, der Modellpopulationssynthesekomponente und der Mehrzahl von Marken basierend auf einer simulationsbasierten Optimierungstechnik, wobei die simulationsbasierte Optimierungstechnik auf einer agentenbasierten Modellierung und einer Simulationsplattform basiert, wobei jeder synthetische Verbraucher als Agent genommen wird, wobei sein Verhalten durch die angehängten Verhaltensmodelle beschrieben wird, wobei ein Simulator für einen Zeitraum einer virtuellen Simulationszeit ausgeführt wird und wöchentliche Verkäufe für eine spezifische Marke für einen Satz von Kombinationen erzeugt, gefolgt von dem Aggregieren der wöchentlichen Verkäufe für den Zeitraum einer virtuellen Simulationszeit, um Gesamtverkäufe zu erzeugen, wobei Simulationen mehrmals ausgeführt werden, um verschiedene Kombinationen von Förderungsparametern zu durchlaufen.

7. System nach Anspruch 6, wobei die Mehrzahl von Vorverarbeitungstechniken eine Datenbereinigungstechnik und eine Datenfiltrationstechnik beinhaltet, wobei während der Datenbereinigung ein fehlender Preis, der mit der Marke assoziiert ist, für jedes Produkt für einen Tag erzeugt wird, eine Transaktion, die einen Preisrabatt mit einem Coupon beinhaltet, entfernt wird, und eine Transaktion, die einen ungültigen Preis enthält, der sich auf einen negativen Wert bezieht, entfernt wird, wobei während der Datenfiltration die Mehrzahl von Eingaben verarbeitet wird, um eine Kategorie/Unterkategorie basierend auf den höchsten Verkäufen zu identifizieren, da die Mehrzahl von Eingaben mehrere Produktkategorien/Unterkategorien umfasst.

EP 4 350 597 B1

8. System nach Anspruch 6, wobei der speicherbasierte Referenzpreis basierend auf vorherigen Käufen eines Verbrauchers berechnet wird, die Verbrauchermarkenloyalität mit einer Neigung assoziiert ist, eine Marke über eine andere Marke zu kaufen, die durchschnittliche Verbrauchsrate ein durchschnittlicher wöchentlicher Verbrauch des Produkts für den Verbraucher ist und das Haushaltsinventar eine Inventarschätzung für den Verbraucher zu einer vordefinierten Zeit angibt.

9. System nach Anspruch 6, wobei die Datenabtasttechnik eine Zufallsabtasttechnik oder eine geschichtete Zufallsabtastung beinhaltet.

10. System nach Anspruch 6, wobei die Mehrzahl von optimalen Preisförderungsparametern unter Verwendung einer Optimierungstechnik geschätzt wird, wobei die Optimierungstechnik eine heuristische Methode ist, die einen genetischen Algorithmus beinhaltet, um eine Kombination der optimalen Förderungsparameter zu identifizieren, und die Parameter, die maximale Verkäufe für ausgewählte Marke oder Marken erzeugen, als die optimalen Förderungsparameter betrachtet werden.

11. Ein oder mehrere nichtflüchtige maschinenlesbare Informationsspeichermedien, die eine oder mehrere Anweisungen umfassen, die bei Ausführung durch einen oder mehrere Hardwareprozessoren bewirken:

Empfangen einer Mehrzahl von Eingaben von einer Mehrzahl von Quellen, wobei die Mehrzahl von Eingaben mit einem von verbraucherverpackten Waren, CPGs, assoziiert ist und die Mehrzahl von Eingaben Informationen über eine Mehrzahl von Kunden, eine Mehrzahl von Produkten und einen Bereich von Promotionsparametern umfasst, wobei die Mehrzahl von Produkten mit einer Mehrzahl von Kategorien, einer Mehrzahl von Klassen und einer Mehrzahl von Marken assoziiert ist, wobei der Bereich von Promotionsparametern eine Promotionstiefe, eine Promotionsdauer und eine Preisstarrheit ist;
Vorverarbeiten der Mehrzahl von Eingaben, um eine Mehrzahl von vorverarbeiteten Daten zu erhalten, wobei die Mehrzahl von Eingaben basierend auf einer Mehrzahl von Vorverarbeitungstechniken vorverarbeitet wird;
Extrahieren einer Mehrzahl von Merkmalen, wobei die Mehrzahl von Merkmalen unter Verwendung der Mehrzahl von vorverarbeiteten Daten extrahiert wird, wobei die Mehrzahl von Merkmalen einen speicherbasierten Referenzpreis, eine Verbrauchermarkenloyalität, eine durchschnittliche Verbrauchsrate und ein Haushaltsinventar umfasst;
Schätzen einer Mehrzahl von Verhaltenselementen durch Trainieren einer Mehrzahl von Verhaltensmodellen, wobei die Mehrzahl von Verhaltenselementen eine Mehrzahl von Kaufinzidenzparametern, eine Mehrzahl von Markenauswahlparametern und eine Mehrzahl von Kaufmengenparametern umfasst und das Trainieren der Mehrzahl von Verhaltensmodellen umfasst:

Schätzen der Mehrzahl von Kaufinzidenzparametern basierend auf dem Trainieren eines Kaufinzidenzmodells, wobei das Kaufinzidenzmodell basierend auf einer logistischen Regressionstechnik trainiert wird;
Schätzen der Mehrzahl von Markenauswahlparametern basierend auf dem Trainieren eines Markenauswahlmodells, wobei das Markenauswahlmodell basierend auf einer multinomialen logistischen Regressionstechnik trainiert wird; und
Schätzen der Mehrzahl von Kaufmengenparametern basierend auf dem Trainieren eines Kaufmengenmodells, wobei das Kaufmengenmodell basierend auf einer Zero-Truncated-Poisson-Regressionstechnik trainiert wird;

Erzeugen einer Mehrzahl von synthetischen Verbraucherdaten basierend auf der Mehrzahl von vorverarbeiteten Daten und der Mehrzahl von Merkmalen unter Verwendung einer Datenabtasttechnik, wobei die Mehrzahl von synthetischen Verbraucherdaten eine Population von virtuellen Verbrauchern angibt, wobei die synthetischen Verbraucherdaten demografische Variablen, die als Eingabe genommen werden, und zusätzliche Variablen für jeden Verbraucher, die von einem Merkmalsextraktor erzeugt werden, beinhalten, wobei innerhalb kombinierter Verbraucherdaten jede Zeile einer anderen Verbraucher-ID zusammen mit ihren demografischen Variablen, wie etwa Alter, Haushaltsgröße und Einkommen, und zusätzlichen Variablen, wie etwa Verbraucherreferenzpreis, Verbrauchermarkenloyalität, durchschnittliche Verbrauchsrate und Haushaltsinventar, entspricht, wobei die erzeugten synthetischen Verbraucherdaten von erforderlicher Größe sind, indem sie unter Verwendung von geschichteter Abtastung oder Zufallsabtastung aus einem kombinierten Datensatz abgetastet werden;
Zuordnen der Mehrzahl von synthetischen Verbraucherdaten und der Mehrzahl von Verhaltenselementen zu der Mehrzahl von Verhaltensmodellen, um eine Modellpopulationssynthesekomponente basierend auf einer Assoziationstechnik zu erhalten; und
Schätzen einer Mehrzahl von optimalen Preisförderungsparametern unter Verwendung des Bereichs von

17

Förderungsparametern, der Modellpopulationssynthesekomponente und der Mehrzahl von Marken basierend auf einer simulationsbasierten Optimierungstechnik, wobei die simulationsbasierte Optimierungstechnik auf einer agentenbasierten Modellierung und einer Simulationsplattform basiert, wobei jeder synthetische Verbraucher als Agent genommen wird, wobei sein Verhalten durch die angehängten Verhaltensmodelle beschrieben wird, wobei ein Simulator für einen Zeitraum einer virtuellen Simulationszeit ausgeführt wird und wöchentliche Verkäufe für eine spezifische Marke für einen Satz von Kombinationen erzeugt, gefolgt von dem Aggregieren der wöchentlichen Verkäufe für den Zeitraum einer virtuellen Simulationszeit, um Gesamtverkäufe zu erzeugen, wobei Simulationen mehrmals ausgeführt werden, um verschiedene Kombinationen von Förderungsparametern zu durchlaufen.

12. Ein oder mehrere nichtflüchtige maschinenlesbare Informationsspeichermedien nach Anspruch 11, wobei die Mehrzahl von Vorverarbeitungstechniken eine Datenbereinigungstechnik und eine Datenfiltrationstechnik beinhaltet, wobei während der Datenbereinigung ein fehlender Preis, der mit der Marke assoziiert ist, für jedes Produkt für einen Tag erzeugt wird, eine Transaktion, die einen Preisrabatt mit einem Coupon beinhaltet, entfernt wird, und eine Transaktion, die einen ungültigen Preis enthält, der sich auf einen negativen Wert bezieht, entfernt wird, wobei während der Datenfiltration die Mehrzahl von Eingaben verarbeitet wird, um eine Kategorie/Unterkategorie basierend auf den höchsten Verkäufen zu identifizieren, da die Mehrzahl von Eingaben mehrere Produktkategorien/Unterkategorien umfasst.

13. Ein oder mehrere nichtflüchtige maschinenlesbare Informationsspeichermedien nach Anspruch 11, wobei der speicherbasierte Referenzpreis basierend auf vorherigen Käufen eines Verbrauchers berechnet wird, die Verbrauchermarkenloyalität mit einer Neigung assoziiert ist, eine Marke über eine andere Marke zu kaufen, die durchschnittliche Verbrauchsrate ein durchschnittlicher wöchentlicher Verbrauch des Produkts für den Verbraucher ist und das Haushaltsinventar eine Inventarschätzung für den Verbraucher zu einer vordefinierten Zeit angibt.

14. Ein oder mehrere nichtflüchtige maschinenlesbare Informationsspeichermedien nach Anspruch 11, wobei die Datenabtasttechnik eine Zufallsabtasttechnik oder eine geschichtete Zufallsabtastung beinhaltet.

15. Ein oder mehrere nichtflüchtige maschinenlesbare Informationsspeichermedien nach Anspruch 11, wobei die Mehrzahl von optimalen Preisförderungsparametern unter Verwendung einer Optimierungstechnik geschätzt wird, wobei die Optimierungstechnik eine heuristische Methode ist, die einen genetischen Algorithmus beinhaltet, um eine Kombination der optimalen Förderungsparameter zu identifizieren, und die Parameter, die maximale Verkäufe für ausgewählte Marke oder Marken erzeugen, als die optimalen Förderungsparameter betrachtet werden.

**Revendications**

1. Procédé mis en œuvre par processeur (300), comprenant :

   la réception d'une pluralité d'entrées en provenance d'une pluralité de sources, par l'intermédiaire d'un ou plusieurs processeurs matériels, dans lequel la pluralité d'entrées est associée à l'un parmi des biens de consommation emballés, CPG, et la pluralité d'entrées comprend des informations sur une pluralité de clients, une pluralité de produits et une plage de paramètres de promotion, où la pluralité de produits est associée à une pluralité de catégories, une pluralité de classes et une pluralité de marques (302), dans lequel la plage de paramètres de promotion est une profondeur de promotion, une durée de promotion et une rigidité de prix ;
   le prétraitement de la pluralité d'entrées pour obtenir une pluralité de données prétraitées, par l'intermédiaire des un ou plusieurs processeurs matériels, dans lequel la pluralité d'entrées est prétraitée sur la base d'une pluralité de techniques de prétraitement (304) ;
   l'extraction d'une pluralité de caractéristiques par l'intermédiaire des un ou plusieurs processeurs matériels, dans lequel la pluralité de caractéristiques est extraite en utilisant la pluralité de données prétraitées, dans lequel la pluralité de caractéristiques comprend un prix de référence basé sur la mémoire, une fidélité de marque de consommateur, un taux de consommation moyen et un inventaire ménager (306) ;
   l'estimation d'une pluralité d'éléments comportementaux en entraînant une pluralité de modèles de comportement (308), par l'intermédiaire des un ou plusieurs processeurs matériels, dans lequel la pluralité d'éléments comportementaux comprend une pluralité de paramètres d'incidence d'achat, une pluralité de paramètres de choix de marque et une pluralité de paramètres de quantité d'achat et l'entraînement de la pluralité de modèles de comportement comprend :
   l'estimation de la pluralité de paramètres d'incidence d'achat sur la base de l'entraînement d'un modèle d'incidence d'achat, dans lequel le modèle d'incidence d'achat est entraîné sur la base d'une technique de régression logistique (308A) ;

l'estimation de la pluralité de paramètres de choix de marque sur la base de l'entraînement d'un modèle de choix de marque, dans lequel le modèle de choix de marque est entraîné sur la base d'une technique de régression logistique multinomiale (308B) ; et
l'estimation de la pluralité de paramètres de quantité d'achat sur la base de l'entraînement d'un modèle de quantité d'achat, dans lequel le modèle de quantité d'achat est entraîné sur la base d'une technique de régression de Poisson tronquée zéro (308C) ;

la génération d'une pluralité de données de consommateur synthétiques sur la base de la pluralité de données prétraitées et de la pluralité de caractéristiques en utilisant une technique d'échantillonnage de données, dans lequel la pluralité de données de consommateur synthétiques indique une population de consommateurs virtuels (310), dans lequel les données de consommateur synthétiques incluent des variables démographiques qui sont prises en tant qu'entrée et des variables supplémentaires pour chaque consommateur générées par un extracteur de caractéristiques, dans lequel dans des données de consommateur combinées, chaque rangée correspond à un ID de consommateur différent avec leurs variables démographiques telles que l'âge, la taille et le revenu de ménage, et des variables supplémentaires telles que le prix de référence de consommateur, la fidélité de marque de consommateur, le taux de consommation moyen et l'inventaire ménager, dans lequel les données de consommateur synthétiques générées sont de taille requise par échantillonnage en utilisant un échantillonnage stratifié ou un échantillonnage aléatoire à partir d'un ensemble de données combinées ;
le mappage de la pluralité de données de consommateur synthétiques et de la pluralité d'éléments comportementaux avec la pluralité de modèles de comportement pour obtenir un composant de synthèse de population de modèle sur la base d'une technique d'association (312) ; et
l'estimation d'une pluralité de paramètres de promotion de prix optimaux, en utilisant la plage de paramètres de promotion, le composant de synthèse de population de modèle et la pluralité de marques sur la base d'une technique d'optimisation basée sur une simulation (314), dans lequel la technique d'optimisation basée sur une simulation est basée sur une modélisation basée sur un agent et une plate-forme de simulation où chaque consommateur synthétique est pris en tant qu'agent avec leur comportement décrit par les modèles de comportement attachés, dans lequel un simulateur est exécuté pendant une période de temps de simulation virtuel, et génère des ventes hebdomadaires pour une marque spécifique pour un ensemble de combinaisons suivi par l'agrégation des ventes hebdomadaires pour la période d'un temps de simulation virtuel pour générer des ventes totales, dans lequel des simulations sont exécutées plusieurs fois pour exécuter diverses combinaisons de paramètres de promotion.

2. Procédé mis en œuvre par processeur selon la revendication 1, dans lequel la pluralité de techniques de prétraitement inclut une technique de nettoyage de données et une technique de filtration de données, dans lequel pendant le nettoyage de données, un prix manquant associé à la marque est généré pour chaque produit pendant une journée, une transaction impliquant une remise de prix avec un coupon est supprimée, une transaction contenant un prix invalide, se référant à une valeur négative, est supprimée, et dans lequel pendant la filtration de données, la pluralité d'entrées est traitée pour identifier une catégorie/sous-catégorie sur la base des ventes les plus élevées, car la pluralité d'entrées comprend plusieurs catégories/sous-catégories de produit.

3. Procédé mis en œuvre par processeur selon la revendication 1, dans lequel le prix de référence basé sur la mémoire est calculé sur la base d'achats précédents d'un consommateur, la fidélité de marque de consommateur est associée à une tendance à acheter une marque plutôt qu'une autre marque, le taux de consommation moyen est une consommation hebdomadaire moyenne du produit pour le consommateur et l'inventaire ménager indique une estimation d'inventaire pour le consommateur à un temps prédéfini.

4. Procédé mis en œuvre par processeur selon la revendication 1, dans lequel la technique d'échantillonnage de données inclut une technique d'échantillonnage aléatoire ou une technique d'échantillonnage stratifié.

5. Procédé mis en œuvre par processeur selon la revendication 1, dans lequel la pluralité de paramètres de promotion de prix optimaux est estimée en utilisant une technique d'optimisation, dans lequel la technique d'optimisation est une méthode heuristique qui inclut un algorithme génétique pour identifier une combinaison des paramètres de promotion optimaux et les paramètres qui génèrent des ventes maximales pour une marque ou des marques sélectionnées sont considérés comme les paramètres de promotion optimaux.

**6.** Système (100), comprenant :

une mémoire (102) stockant des instructions ;
une ou plusieurs interfaces de communication (106) ; et
un ou plusieurs processeurs matériels (104) couplés à la mémoire (102) par l'intermédiaire des une ou plusieurs interfaces de communication (106), dans lequel les un ou plusieurs processeurs matériels (104) sont configurés par les instructions pour :

recevoir une pluralité d'entrées en provenance d'une pluralité de sources, dans lequel la pluralité d'entrées est associée à l'un parmi les biens de consommation emballés, CPG, et la pluralité d'entrées comprend des informations sur une pluralité de clients, une pluralité de produits et une plage de paramètres de promotion, où la pluralité de produits est associée à une pluralité de catégories, une pluralité de classes et une pluralité de marques, dans lequel la plage de paramètres de promotion est une profondeur de promotion, une durée de promotion et une rigidité de prix ;
prétraiter la pluralité d'entrées pour obtenir une pluralité de données prétraitées, dans lequel la pluralité d'entrées est prétraitée sur la base d'une pluralité de techniques de prétraitement ;
extraire une pluralité de caractéristiques, dans lequel la pluralité de caractéristiques est extraite en utilisant la pluralité de données prétraitées, dans lequel la pluralité de caractéristiques comprend un prix de référence basé sur la mémoire, une fidélité de marque de consommateur, un taux de consommation moyen et un inventaire ménager ;
estimer une pluralité d'éléments comportementaux en entraînant une pluralité de modèles de comportement, dans lequel la pluralité d'éléments comportementaux comprend une pluralité de paramètres d'incidence d'achat, une pluralité de paramètres de choix de marque et une pluralité de paramètres de quantité d'achat et l'entraînement de la pluralité de modèles de comportement comprend :

l'estimation de la pluralité de paramètres d'incidence d'achat sur la base de l'entraînement d'un modèle d'incidence d'achat, dans lequel le modèle d'incidence d'achat est entraîné sur la base d'une technique de régression logistique ;
l'estimation de la pluralité de paramètres de choix de marque sur la base de l'entraînement d'un modèle de choix de marque, dans lequel le modèle de choix de marque est entraîné sur la base d'une technique de régression logistique multinomiale ; et
l'estimation de la pluralité de paramètres de quantité d'achat sur la base de l'entraînement d'un modèle de quantité d'achat, dans lequel le modèle de quantité d'achat est entraîné sur la base d'une technique de régression de Poisson tronquée zéro ;

générer une pluralité de données de consommateur synthétiques sur la base de la pluralité de données prétraitées et de la pluralité de caractéristiques en utilisant une technique d'échantillonnage de données, dans lequel la pluralité de données de consommateur synthétiques indique une population de consommateurs virtuels, dans lequel les données de consommateur synthétiques incluent des variables démographiques qui sont prises en tant qu'entrée et des variables supplémentaires pour chaque consommateur générées par un extracteur de caractéristiques, dans lequel dans des données de consommateur combinées, chaque rangée correspond à un ID de consommateur différent avec leurs variables démographiques telles que l'âge, la taille et le revenu de ménage, et des variables supplémentaires telles que le prix de référence de consommateur, la fidélité de marque de consommateur, le taux de consommation moyen et l'inventaire ménager, dans lequel les données de consommateur synthétiques générées sont de taille requise par échantillonnage en utilisant un échantillonnage stratifié ou un échantillonnage aléatoire à partir d'un ensemble de données combinées ;
mapper la pluralité de données de consommateur synthétiques et la pluralité d'éléments comportementaux avec la pluralité de modèles de comportement pour obtenir un composant de synthèse de population de modèle sur la base d'une technique d'association ; et
estimer une pluralité de paramètres de promotion de prix optimaux, en utilisant la plage de paramètres de promotion, le composant de synthèse de population de modèle et la pluralité de marques sur la base d'une technique d'optimisation basée sur une simulation, dans lequel la technique d'optimisation basée sur une simulation est basée sur une modélisation basée sur un agent et une plate-forme de simulation où chaque consommateur synthétique est pris en tant qu'agent avec leur comportement décrit par les modèles de comportement attachés, dans lequel un simulateur est exécuté pendant une période de temps de simulation virtuel, et génère des ventes hebdomadaires pour une marque spécifique pour un ensemble de combinaisons suivi par l'agrégation des ventes hebdomadaires pour la période d'un temps de simulation virtuel pour générer des ventes totales, dans lequel des simulations sont exécutées plusieurs fois pour exécuter diverses combinaisons de paramètres de promotion.

7. Système selon la revendication 6, dans lequel la pluralité de techniques de prétraitement inclut une technique de nettoyage de données et une technique de filtration de données, dans lequel pendant le nettoyage de données, un prix manquant associé à la marque est généré pour chaque produit pendant une journée, une transaction impliquant une remise de prix avec un coupon est supprimée, et une transaction contenant un prix invalide, se référant à une valeur négative, est supprimée, dans lequel pendant la filtration de données, la pluralité d'entrées est traitée pour identifier une catégorie/sous-catégorie sur la base des ventes les plus élevées, car la pluralité d'entrées comprend plusieurs catégories/sous-catégories de produit.

8. Système selon la revendication 6, dans lequel le prix de référence basé sur la mémoire est calculé sur la base d'achats précédents d'un consommateur, la fidélité de marque de consommateur est associée à une tendance à acheter une marque plutôt qu'une autre marque, le taux de consommation moyen est une consommation hebdomadaire moyenne du produit pour le consommateur et l'inventaire ménager indique une estimation d'inventaire pour le consommateur à un temps prédéfini.

9. Système selon la revendication 6, dans lequel la technique d'échantillonnage de données inclut une technique d'échantillonnage aléatoire ou un échantillonnage aléatoire stratifié.

10. Système selon la revendication 6, dans lequel la pluralité de paramètres de promotion de prix optimaux est estimée en utilisant une technique d'optimisation, dans lequel la technique d'optimisation est une méthode heuristique qui inclut un algorithme génétique pour identifier une combinaison des paramètres de promotion optimaux et les paramètres qui génèrent des ventes maximales pour une marque ou des marques sélectionnées sont considérés comme les paramètres de promotion optimaux.

11. Un ou plusieurs supports de stockage d'informations lisibles par machine non transitoires comprenant une ou plusieurs instructions qui, lorsqu'elles sont exécutées par un ou plusieurs processeurs matériels, amènent :

la réception d'une pluralité d'entrées en provenance d'une pluralité de sources, dans lequel la pluralité d'entrées est associée à l'un parmi les biens de consommation emballés, CPG, et la pluralité d'entrées comprend des informations sur une pluralité de clients, une pluralité de produits et une plage de paramètres de promotion, où la pluralité de produits est associée à une pluralité de catégories, une pluralité de classes et une pluralité de marques, dans lequel la plage de paramètres de promotion est une profondeur de promotion, une durée de promotion et une rigidité de prix ;
le prétraitement de la pluralité d'entrées pour obtenir une pluralité de données prétraitées, dans lequel la pluralité d'entrées est prétraitée sur la base d'une pluralité de techniques de prétraitement ;
l'extraction d'une pluralité de caractéristiques, dans lequel la pluralité de caractéristiques est extraite en utilisant la pluralité de données prétraitées, dans lequel la pluralité de caractéristiques comprend un prix de référence basé sur la mémoire, une fidélité de marque de consommateur, un taux de consommation moyen et un inventaire ménager ;
l'estimation d'une pluralité d'éléments comportementaux en entraînant une pluralité de modèles de comportement, dans lequel la pluralité d'éléments comportementaux comprend une pluralité de paramètres d'incidence d'achat, une pluralité de paramètres de choix de marque et une pluralité de paramètres de quantité d'achat et l'entraînement de la pluralité de modèles de comportement comprend :

l'estimation de la pluralité de paramètres d'incidence d'achat sur la base de l'entraînement d'un modèle d'incidence d'achat, dans lequel le modèle d'incidence d'achat est entraîné sur la base d'une technique de régression logistique ;
l'estimation de la pluralité de paramètres de choix de marque sur la base de l'entraînement d'un modèle de choix de marque, dans lequel le modèle de choix de marque est entraîné sur la base d'une technique de régression logistique multinomiale ; et
l'estimation de la pluralité de paramètres de quantité d'achat sur la base de l'entraînement d'un modèle de quantité d'achat, dans lequel le modèle de quantité d'achat est entraîné sur la base d'une technique de régression de Poisson tronquée zéro ;

la génération d'une pluralité de données de consommateur synthétiques sur la base de la pluralité de données prétraitées et de la pluralité de caractéristiques en utilisant une technique d'échantillonnage de données, dans lequel la pluralité de données de consommateur synthétiques indique une population de consommateurs virtuels, dans lequel les données de consommateur synthétiques incluent des variables démographiques qui sont prises en tant qu'entrée et des variables supplémentaires pour chaque consommateur générées par un extracteur de caractéristiques, dans lequel dans des données de consommateur combinées, chaque rangée correspond à un ID de consommateur différent avec leurs variables démographiques telles que l'âge, la taille et le revenu de ménage, et des variables supplémentaires telles que le prix de référence de consommateur, la fidélité de marque de consommateur, le taux de consommation moyen et l'inventaire ménager, dans lequel les données de consommateur synthétiques générées sont de taille requise par échantillonnage en utilisant un échantillonnage stratifié ou un échantillonnage aléatoire à partir d'un ensemble de données combinées ;

le mappage de la pluralité de données de consommateur synthétiques et de la pluralité d'éléments comportementaux avec la pluralité de modèles de comportement pour obtenir un composant de synthèse de population de modèle sur la base d'une technique d'association ; et

l'estimation d'une pluralité de paramètres de promotion de prix optimaux, en utilisant la plage de paramètres de promotion, le composant de synthèse de population de modèle et la pluralité de marques sur la base d'une technique d'optimisation basée sur une simulation, dans lequel la technique d'optimisation basée sur une simulation est basée sur une modélisation basée sur un agent et une plate-forme de simulation où chaque consommateur synthétique est pris en tant qu'agent avec leur comportement décrit par les modèles de comportement attachés, dans lequel un simulateur est exécuté pendant une période de temps de simulation virtuel, et génère des ventes hebdomadaires pour une marque spécifique pour un ensemble de combinaisons suivi par l'agrégation des ventes hebdomadaires pour la période d'un temps de simulation virtuel pour générer des ventes totales, dans lequel des simulations sont exécutées plusieurs fois pour exécuter diverses combinaisons de paramètres de promotion.

12. Un ou plusieurs supports de stockage d'informations lisibles par machine non transitoires selon la revendication 11, dans lequel la pluralité de techniques de prétraitement inclut une technique de nettoyage de données et une technique de filtration de données, dans lequel pendant le nettoyage de données, un prix manquant associé à la marque est généré pour chaque produit pendant une journée, une transaction impliquant une remise de prix avec un coupon est supprimée, et une transaction contenant un prix invalide, se référant à une valeur négative, est supprimée, dans lequel pendant la filtration de données, la pluralité d'entrées est traitée pour identifier une catégorie/sous-catégorie sur la base des ventes les plus élevées, car la pluralité d'entrées comprend plusieurs catégories/sous-catégories de produit.

13. Un ou plusieurs supports de stockage d'informations lisibles par machine non transitoires selon la revendication 11, dans lequel le prix de référence basé sur la mémoire est calculé sur la base d'achats précédents d'un consommateur, la fidélité de marque de consommateur est associée à une tendance à acheter une marque plutôt qu'une autre marque, le taux de consommation moyen est une consommation hebdomadaire moyenne du produit pour le consommateur et l'inventaire ménager indique une estimation d'inventaire pour le consommateur à un temps prédéfini.

14. Un ou plusieurs supports de stockage d'informations lisibles par machine non transitoires selon la revendication 11, dans lequel la technique d'échantillonnage de données inclut une technique d'échantillonnage aléatoire ou un échantillonnage aléatoire stratifié.

15. Un ou plusieurs supports de stockage d'informations lisibles par machine non transitoires selon la revendication 11, dans lequel la pluralité de paramètres de promotion de prix optimaux est estimée en utilisant une technique d'optimisation, dans lequel la technique d'optimisation est une méthode heuristique qui inclut un algorithme génétique pour identifier une combinaison des paramètres de promotion optimaux et les paramètres qui génèrent des ventes maximales pour une marque ou des marques sélectionnées sont considérés comme les paramètres de promotion optimaux.

**SYSTEM**
**100**

**PROCESSOR(S)**
**104**

**I/O INTERFACE(S)**
**106**

**MEMORY**
**102**

**DATABASE**
**108**

**FIG. 1**

| | | FEATURE EXTRACTOR 206 | → | BEHAVIORAL ELEMENTS MODULE 208 |

Plurality of input → INPUT MODULE 202 → PRE-PROCESSOR 204

SYNTHETIC CONSUMER MODULE 210 → MODEL POPULATION SYNTHESIS COMPONENT 212

OPTIMAL PRICE PROMOTION PARAMETERS MODULE 214 → Plurality of optimal price promotion parameters

200

FIG.2

receiving a plurality of inputs from a plurality of sources, via one or more hardware processors, wherein the plurality of inputs is associated with one of a consumer-packaged goods (CPGs) and the plurality of inputs comprises information on a plurality of customers, a plurality of products and a range of promotion parameters, where the plurality of products is associated with a plurality of categories, a plurality of classes and a plurality of brands  — 302

pre-processing the plurality of inputs to obtain a plurality of pre-processed data, via the one or more hardware processors, wherein the plurality of inputs is pre-processed based on a plurality of pre-processing techniques  — 304

extracting a plurality of features, via the one or more hardware processors, wherein the plurality of features is extracted using the plurality of pre-processed data, wherein the plurality of features comprises a memory-based reference price, a consumer brand loyalty, an average consumption rate and a household inventory  — 306

300

(A)

**FIG. 3A**

(A)

estimating a plurality of behavioral elements by training a plurality of behaviour models, via the one or more hardware processors, wherein the plurality of behavioral elements comprises a plurality of purchase incidence parameters, a plurality of brand choice parameters and a plurality of purchase quantity parameters and the training of the plurality of behaviour models comprises: — 308

estimating the plurality of purchase incidence parameters based on training a purchase incidence model, wherein the purchase incidence model is trained based on a logistic regression technique — 308A

estimating the plurality of brand choice parameters based on training a brand choice model, wherein the brand choice model is trained based on a multinomial logistic regression technique — 308B

estimating the plurality of purchase quantity parameters based on training a purchase quantity model, wherein the purchase quantity model is trained based on a Zero-truncated Poisson regression technique — 308C

(B)

300

FIG. 3B

(B)

generating a plurality of synthetic consumer data based on the plurality of pre-processed data and the plurality of feature using a data sampling technique, wherein the plurality of synthetic consumer data indicates a population of virtual consumers — 310

mapping the plurality of synthetic consumer data and the plurality of behavioral elements with the plurality of behaviour models to obtain a model population synthesis component based on an association technique — 312

estimating a plurality of optimal price promotion parameters, using the range of promotion parameters, the model population synthesis component and the plurality of brands based on a simulation-based optimization technique — 314

FIG. 3C

300

**EP 4 350 597 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202221057043
- US 20220058661 A1

- US 20210125237 A1